# EUROPEAN PATENT APPLICATION

(11) **EP 1 566 423 A1**
(43) Date of publication of application: **24.08.2005**
(21) Application number: 04100665.1
(22) Date of filing: 19.02.2004
(51) Int. Cl.: C09J 153/02, C08F 297/04, A61L 15/58

(54) **Low viscosity hot-melt adhesive composition for non-wovens**

(71) Applicant: KRATON Polymers Research B.V., 1030 BH Amsterdam (NL)
(72) Inventor: De Keyzer, Noel Raymond Maurice, 1348 Ottignies-Louvain-La-Neuve (BE); Van Dijk, Cornelis Martinus, 1031 CM Amsterdam (NL)
(74) Representative: Kortekaas, Marcel C.J.A.

(57) **Abstract**

Low hot-melt adhesive compositions used in non-woven assemblies, comprising:
a) 100 parts by weight of a block copolymer of the formula S-(I/B)-S, wherein S represents a predominantly poly(styrene) block and (I/B) represents a polymer block obtained by at random copolymerization of a mixture of predominantly isoprene and butadiene in a weight ratio in the range of from 70:30 to 30:70, wherein the total block copolymer has an apparent molecular weight in the range of from 120.000 to 150.000 and has a poly(styrene) content of from 25 to 40 wt% and a coupling efficiency of from 60 to 100 %,
b) from 250 to 300 parts by weight of a tackifying resin,
c) from 5 to 150 parts by weight of a plasticizer, and
d) from 1 to 3 parts by weight of auxiliaries, such as stabilizers and/or antioxidants,
and disposable articles, comprising at least a non-woven element and assembled by the use of said low hot-melt adhesive compositions as well as block copolymers used therein.

## Description

### Background art

It is generally known in the art, e.g. from WO 9102039 , EP 0532831 A and EP 0802251 A that block copolymers, comprising terminal poly(styrene) blocks and one or more central poly(isoprene) blocks and more in particular triblock copolymers, are used in hot melt adhesive compositions for the manufacture of disposable articles. More in particular triblock copolymers having a poly(styrene) content of from 25 to 35 wt% and having a total apparent molecular weight of from 140.000 to 145.000, like KRATON® D-1165 block copolymer, are used in hot-melt adhesive compositions in the diaper industry with two functions:
1. as assembly adhesive to glue the diaper poly(ethylene) main frame and
2. as an attachment adhesive to glue the elastic attachments which are used as waist and leg bands.

Although said block copolymers like KRATON D-1165 block copolymer, show an acceptable hot-melt viscosity/temperature profile, i.e. a sufficient low viscosity at the usually applied hot-melt temperatures of up to 150°C to enable efficient processing, there is still a need for lower viscosities of such hot-melt compositions for economical reasons.

It will be appreciated that relatively low hot-melt viscosity enables a high production speed in a diaper manufacturing line without significant amounts of products which are out of specification and which have actually to be regarded as waste, which increases the cost price per unit.

Problems which normally cause said cost price increase may be for example adhesive degradation, damage to the polyethylene film or formation of char.

Due to the still existing need to improve the economics of the diaper manufacture and to lower the cost price per unit, significant research and development efforts have been and are made to reach these goals.

Therefore, it is an object of the present invention to provide hot-melt adhesive compositions which show a significantly decreased viscosity at temperatures in the range of from 110°C to 150°C in order to avoid the hereinbefore mentioned problems.

Another object of the present invention is formed by sanitary articles, comprising at least one non-woven layer and manufactured by means of said improved hot-melt adhesive compositions.

As result of extensive research and experimentation it has now surprisingly been found that linear block copolymers comprising at least two terminal, predominantly poly(styrene) blocks and at least one central (I/B) block, and having corresponding molecular parameters as the until now preferably applied S-I-S block copolymers, show a lower hot-melt viscosity in adhesive compositions at temperatures to be preferably applied in the diaper industry, i.e. in the range of from 110 to 150°C, than the conventional adhesive compositions based on S-I-S block copolymer.

Moreover, hot melt adhesive compositions comprising said S-(I/B)-S block copolymers have been found to show an increased cohesion.

### Disclosure of the Invention

Accordingly the present invention relates to a low hot-melt viscosity adhesive composition used in non-woven assemblies, comprising:
a) 100 parts by weight of a block copolymer of the formula S-(I/B)-S, wherein S represents a predominantly poly(styrene) block and (I/B) represents a polymer block obtained by at random copolymerization of a mixture of predominantly isoprene and butadiene in a weight ratio in the range of from 70:30 to 30:70. wherein the total block copolymer has an apparent molecular weight in the range of from 120.000 to 150.000 and has a poly(styrene) content of from 25 to 40 wt% and a coupling efficiency of from 60 to 100 %,
b) from 250 to 300 parts by weight of a tackifying resin,
c) from 5 to 150 parts by weight of a plasticizer , and
d) from 1 to 3 parts by weight of auxiliaries, such as stabilizers and/or antioxidants.

Said adhesive compositions comprising for instance 25 wt% of block copolymer in its formulation have appeared to show a hot-melt viscosity at about 130°C, which is at least 25% lower (e.g. 20 Pas) than a corresponding adhesive composition having the same composition, but comprising a corresponding block copolymer of the S-I-S type.

It will be appreciated that a significant advantage therefore has been reached, as the compositions of the present invention enable either processing at lower temperatures (i.e. in the range of from 110 to 130°C) or faster processing.

Other aspects of the present invention are formed by disposable articles such as infant and adult diapers, sanitary napkins, incontinent pads, bed pads, feminine pads, panty shields, comprising at least one non-woven element and assembled by the use of the hereinbefore specified low hot melt viscosity adhesive compositions, and by the specific block copolymers to be used therein.

A particular aspect of the present invention is formed by feminine pads, using the hereinbefore specified low hot melt viscosity compositions as positioning adhesive.

### Mode(s) for carrying out the invention

The main block copolymer used in the adhesive composition is

### component (a)

A block copolymer, having a structure represented by the general formula S-(I/B)-S, optionally mixed with a diblock copolymer S-(I/B), wherein S represents a predominantly poly(styrene) block, (I/B) represents a block of a randomly copolymerized mixture of predominantly isoprene and butadiene, wherein the weight ratio between isoprene and butadiene is in the range of from 70:30 to 30:70 (or in a mole/mole ratio of from 1.1/0.55 to 0.45/1.3).

Preferred weight ratios between isoprene and butadiene are in the range of from 60:40 to 40:60 (or in a molar ratio of from 0.89/0.75 to 0.75/0.89). More preferred weight ratios of isoprene and butadiene are in the range of from 55:45 to 45:55.

With the terms "predominantly poly(styrene)" and "mixtures of predominantly isoprene and butadiene" are meant that in addition to the main monomer, i.e. styrene on the one hand and on the other hand isoprene and butadiene, one or more other minor comonomers may be present in the starting monomer in small amounts, i.e. up to 5 wt% of copolymerizable monomer. However, preferably substantially pure (co)monomers may be used for the preparation of the respective blocks.

Examples of minor comonomers of used in addition to styrene are alphamethylstyrene, p-methylstyrene, o-methylstyrene, p-tert.butylstyrene, dimethylstyrene and vinyl naphthalene or mixtures thereof.

The mixed polymer midblock (I/B) is made of butadiene and isoprene as copolymerizing monomers, although it too may contain minor amounts of other comonomers, e.g. up to 5 wt% of a copolymerizable monomer such as styrene (based on the weight of the total block), but mixtures of substantially pure isoprene and butadiene are preferred. Additional examples of comonomers used in addition to the isoprene/butadiene mixture include the aforementioned comonomers of styrene as well as neoprene or chloroprene.

In the block copolymers according to the present invention, the poly(styrene) content (which may include optional comonomers) is in the range of 25-40 wt%, preferably 30-34 wt%, based on the total block copolymer. The proportion of bound butadiene is 18-80 wt%, preferably 40-70 wt% in total. The proportion of bound isoprene is 15-70 wt%, preferably 30-70 wt%. These amounts of bound monomers (plus copolymerizable monomers, if any) add up to 100 wt%.

These polymer blocks S preferably have a true molecular weight in the range from 9,500 to 25,000 and more preferably from 14,000 to 15,000.

The block copolymers to be applied in the adhesive compositions according to the present invention each preferably have a weight average molecular weight (Mw, expressed in terms of polystyrene) ranging from 120,000 to 150,000, more preferably from 124,000 to 145,000 as determined by Gel Permeation Chromatography (GPC, analogous to the method described in ASTM D5296-97).

The block copolymers to be applied in the adhesive compositions according to the present invention each preferably contain 1,2-vinyl bonds and/or 3,4-vinyl bonds in a proportion in the range of from 4 to 10 wt%, based on the weight of the conjugated diene (or in the range of from 00.08 to 0.70 mole/mole %).

Preferably the (I/B) block has a vinyl content in the polymerized butadiene in the range of from 7 to 9 wt% and a vinyl content in the polymerized isoprene in the range of from 4 to 6 wt%.

Said block copolymers to be applied as main component (a) in the adhesive composition, have a randomly copolymerized block (I/B), which means that the mixed midblock shows no significant single homopolymer block formation.

They can be prepared as described in WO 02057386 .

More in particular, polymers having midblocks may be defined as having average homopolymer block lengths of less than 100 monomer units, preferably less than 50 monomer units, more preferably less than 20 monomer units.

Average homopolymer block length may be determined by carbon-13 NMR, as described in detail in WO 02057386 , which is herein incorporated by reference.

Although the hereinbefore mentioned publication WO 02057386 disclosed adhesive compositions comprising one or more styrenic block copolymers comprising a central (I/B) block, a tackifier resin and one or more plasticizers, there was not any teaching to a person skilled in the art as to the presently found decrease in viscosity of hot-melt adhesive compositions in comparison to the conventional S-I-S block copolymer containing hot-melt adhesive compositions.

In this respect particular reference is made to page 19, Table 2, and to page 28, Table 9, from which only higher viscosities of similar hot-melt adhesive compositions were known, if structurally related block copolymers, having an apparent molecular weight of more than 150,000, were applied therein.

The block copolymers according to the present invention can be made e.g. by coupling living diblock copolymer prepared by anionic polymerization with a coupling agent.

As examples of the coupling agent, may be mentioned tin coupling agents such as tin dichloride, monomethyltin dichloride, dimethyltin dichloride, monoethyltin dichloride, diethyltin dichloride, methyltin trichloride, monobutyltin dichloride, dibutyltin dibromide, monohexyltin dichloride and tin tetrachloride; halogenated silicon coupling agents such as dichlorosilane, monomethyldichlorosilane, dimethyldichlorosilane, monoethyldichlorosilane, diethyldichlorosilane, monobutyldichlorosilane, dibutyldichlorosilane, monohexyldichlorosilane, dihexyldichlorosilane, dibromosilane, monomethyldibromosilane, dimethyldibromosilane, silicon tetrachloride and silicon tetrabromide; alkoxysilanes such as tetramethoxysilane; divinyl aromatic compounds such as divinylbenzene and divinylnaphthalene; halogenated alkanes such as dichloroethane, dibromoethane, methylene chloride, dibromomethane, dichloropropane, dibromopropane, chloroform, trichloroethane, trichloropropane and tribromopropane; halogenated aromatic compounds such as dibromobenzene; epoxy compounds such as the diglycidyl ether of bisphenol-A and the like (e.g., EPON 825 and EPON 826 diglycidyl ether, trademark) and other coupling agents such as benzoic esters, CO, 2and 1-chloro-I,3-butadiene. Of these, EPON 825 and EPON 826 diglycidyl ether, dibromobenzene, tetramethoxysilane or other tetra(alkoxy)silanes are preferred. A more preferred coupling agent is EPON 826 diglycidyl ether.

The main block copolymer in component (a) may hence comprise a mixture of the coupled polymer according to the general formulae S-(I/B)-S and of the intermediate diblock S-(I/B), e.g. in a weight ratio of 100/0 to 60/40, and preferably from 100/0 to 70/30.

It will be appreciated that the main block copolymer component (a) may also be formed by a block copolymer obtained by sequential polymerization of batches of the respective monomers (e.g. styrene and mixtures of butadiene/isoprene, optionally in combination with reinitiation, if additional diblock copolymer is desired.

The main block copolymer component (a) can be made by mere adaptation of common processes used for the preparation of S-B-S type block copolymers and/or S-I-S type block copolymers, using a mixture of butadiene/isoprene instead. Of importance in the preparation of the block copolymers to be used according to the present invention is to avoid homopolymer block formation to ensure the desired (I/B) ratio.

It will be appreciated that another aspect of the present invention is formed by the block copolymers specified herein before and in the claims.

### Component (b)

The tackifying resins to be used in the hot-melt adhesive compositions of the present invention can be selected from a great variety of resins known to be applicable in hot-melt adhesives.

They can be selected from modified aliphatic hydrocarbon resins such as modified C5 hydrocarbon resins (C5/C9 resins), styrenated terpene resins, fully or partially hydrogenated C9 hydrocarbon resins, hydrogenated cycloaliphatic hydrocarbon resins, hydrogenated aromatic modified cycloaliphatic hydrocarbon resins, and mixtures thereof.

More preferred examples of resins to be used as component (b) are: water white hydrocarbon resins of the ESCOREZ resin series, such as ESCOREZ 5600, ESCOREZ 5400, ESCOREZ 5300 and the like, or hydrocarbon resins of the REGALITE resin series such as REGALITE-1090, REGALITE-7100 and REGALITE S-5100 resins and the like, or the ARKON resin series, like ARKON P and M resin. ESCOREZ, REGALITE and ARKON are trademarks.

Preferred solid tackifying resins will have Ring and Ball softening points in the range of from 90°C to 105°C and will have an aromatic H-NMR content between 0 and 16 % and more preferably between 0 and 12 %.

In preferred low hot- melt viscosity adhesive compositions of the present invention the component (b) is applied in amounts of from 250 to 280 parts by weight of tackifying resin per 100 parts by weight of block copolymer components (a) and (b).

### Component (c)

Suitable plasticizers include predominantly plasticizing oils that are paraffinic or naphthenic in character (carbon aromatic distribution ≤ 5%, preferably ≤ 2%, more preferably 0% as determined according to DIN 51378) and a glass transition temperature lower than -55°C as measured by Differential Scanning Calorimetry. Those products are commercially available from the Royal Dutch/Shell Group of companies, like SHELLFLEX, CATENEX, and ONDINA oils. Other oils include KAYDOL oil from Witco, or TUFFLO oils from Arco or NYPLAST from NYNAS. Other plasticizers include compatible liquid tackifying resins like REGALREZ R-1018 or WINGTACK 10. (SHELLFLEX, CATENEX, ONDINA, KAYDOL, TUFFLO, REGALREZ, WINGTACK, NYPLAST are trademarks).

Other plasticizers may also be added, like olefin oligomers; low molecular weight polymers (≤ 30,000 g/mol) like liquid polybutene, liquid polyisoprene copolymers, liquid styrene/isoprene copolymers or liquid hydrogenated styrene/conjugated diene copolymers; vegetable oils and their derivatives; or paraffin and microcrystalline waxes.

The hot-melt adhesive composition according to the present invention comprises a plasticizer in a weight proportion of from 11 to 27 wt%, relative to the weight of the complete composition and of from 5 to 150 parts by weight of plasticizer per 100 parts by weight of block copolymer constituent (a). Preferably the hot-melt adhesive composition comprises from 100 to 125 parts by weight of plasticizer per 100 parts by weight of block copolymer.

It will be appreciated that each block copolymer of component (a) may be pre-blended with a small amount of plasticizer by the manufacturer of said copolymer.

### Other components (non-limitative)

Other rubber components may be incorporated into the adhesive compositions according to the present invention. It is also known in the art that various other components can be added to modify the tack, the odour, the colour of the adhesives.

Antioxidants and other stabilizing ingredients can also be added to protect the adhesive from degradation induced by heat, light and processing or during storage. Several types of antioxidants can be used, either primary antioxidants like hindered phenols or secondary antioxidants like phosphite derivatives or blends thereof.

Examples of commercially available antioxidants are IRGANOX 565 from Ciba-Geigy (2.4-bis-(n-octylthio)-6-(4-hydroxy-3,5-di-tertiary-butyl anilino)-1,3,5-triazine), IRGANOX 1010 from Ciba-Geigy (tetrakis-ethylene-(3,5-di-tertiary-butyl-4-hydroxy-hydrocinnamate)methane) and POLYGARD HR from Uniroyal (tris-(2,4-di-tertiary-butyl-phenyl)phosphite). Other antioxidants developed to protect the gelling of the polybutadiene segments can also be use, like the SUMILIZER GS from Sumitomo (2[1-(2-hydroxy-3,5-di-ter-pentylphenyl)ethyl)]-4,6-di-tert-pentylphenylacrylate); SUMILIZER T-PD from Sumitomo (pentaerythrythyltetrakis(3-dodecylthiopropionate)); or mixtures thereof. (IRGANOX, POLYGARD and SUMILIZER are trademarks).

### Preparation of the composition

No particular limitation is imposed on the preparation process of the adhesive composition. Therefore, there may be used any process such as a mechanically mixing process making use of rolls, a Banbury mixer or a Dalton kneader, a hot-melt process characterized in that heating and mixing are conducted by using a melting kettle equipped with a stirrer, like a turbo-mixer, a high shear Z-blade mixer or a single- or twin-screw extruder, or a solvent process in which the compounding components are poured in a suitable solvent and stirred, thereby obtaining an intimate solution of the pressure sensitive adhesive composition.

### Use of the composition

Hot-melt adhesive compositions according to the present invention are efficiently applied as assembly adhesive composition or as attachment adhesive composition for assembling sanitary articles and in particular diapers, comprising a polyethylene framework and at least one non-woven lining element.

The present invention will hereinafter be illustrated more specifically by the following examples, however without restricting its scope to these specific embodiments.

### Test methods

- Polystyrene content was determined by 1H-NMR.
- Average homopolymer block lengths were determined by 13C NMR, using the method described hereinbefore. 13C NMR spectra were obtained by using a BRUKER AMX-500 FT spectiometer operating at 125 MHz. Quantitative proton-decoupled spectra were recorded with a 90C 13C excitation pulse and a repetition rate of 10 s. Polymer solutions in CDCl3, having a concentration of 10 % (w/w) were used. To improve the relaxation time 0.1 mol/l chromium acetyl acetonate was added. The applied broadening was 2 Hz. The spectra were referred such that the aliphatic carbons of trans-polybutadiene were 31.9 ppm.
- Hot-melt viscosity is measured with a rotational viscometer following ASTM D-3236-78. The viscosity is measured by the torque required to rotate a spindle at constant speed while immersed in a fluid. A sample is placed in a RVTDV-II equipped with a Brookfield Thermocell and the hot-melt viscosity is measured in a temperature range of 110°C to 160°C. Results are expressed in Pascal.second (Pa.s).

### Synthesis of the block copolymers A to H

Cyclohexane, styrene, butadiene and isoprene were purified by activated aluminumoxide and stored at 4°C under a nitrogen atmosphere. EPON 826 diglycidyl ether was used as coupling agent. Prior to synthesis, a monomer mixture of butadiene and isoprene (at a weight/weight ratio given in Table 1) was prepared and stored under nitrogen at 4°C. This mixture was used as such.

An autoclave, equipped with a helical stirrer was charged with cyclohexane and the content was heated to 50 to 60°C. As initiator sec-BuLi was dosed immediately followed by styrene monomer, which was allowed to polymerize to completion. The reaction temperature was increased to 70°C, at which temperature a butadiene/isoprene monomer mixture (B/I) was dosed and reacted. The resulting diblock was coupled with an excess EPON 826 diglycidyl ether or EDB. This excess was optionally scavenged with sec-BuLi and followed by addition of ethanol as terminator. The reaction mixture was cooled to 40°C, transported to a blending vessel and a stabilization package was added (comprising IRGANOX 565 and tris(nonylphenol)phosphite 0.08/0.35 phr as a cyclohexane solution) and stirred at RT. Dry rubber was obtained by steam coagulation finishing, followed by drying in an oven.

Table 1 lists the amounts in which the components A and B have been used. The polymers were analyzed by GPC and the results thereof are in Table 2.

Polymers A, C, D, E, F, G, and H have been coupled with EPON 826. Polymer B, included as comparative with a MW greater than 150,000, has been coupled with EDB.

These polymers can also be polymerized with the hereinbefore described sequential/reinitiation technology.

**Table 1**

| Polymer | A | B |
|---|---|---|
| Cyclohexane (I) | 77 | 6 |
| Initiator (mmol) | 20.5 | 17.5 |
| Styrene (gram) | 638 | 256.7 |
| B/I (ratio) | 1 | 1 |
| B/I (gram) | 1490 | 598.1 |
| EPON 826 (gram) | 0.24 | |
| EDB (mol%) | | 21 |
| Ethanol (ml) | 1 | 1.2 |

**Table 2**

| Polymer | A | B | C | D | E | F | G | H |
|---|---|---|---|---|---|---|---|---|
| Mw Polystyrene*10³ | 14.2 | 14.8 | 14.4 | 13.7 | 14.2 | 13.9 | 14.2 | 14.6 |
| Total Mw*10³ | 143 | 153 | 137 | 138 | 142 | 124 | 128 | 130 |
| Coupling efficiency % | 81 | 81 | 80 | 79 | 73 | 73 | 81 | 79 |
| Polystyrene content wt% | 31 | 30 | 30 | 30 | 31 | 34 | 34 | 33 |
| Bd/Ip ratio wt/wt | 1 | 1 | 1 | 1.45 | 0.98 | 0.69 | 0.72 | 0.99 |
| vinyl in Bd wt % | 8 | 8 | 8 | 8 | 8 | 8 | 8 | 8 |
| vinyl in Ip wt% | 5 | 5 | 5 | 5 | 5 | 5 | 5 | 5 |

Further components used in the tested adhesive compositions have been listed in Table 3.

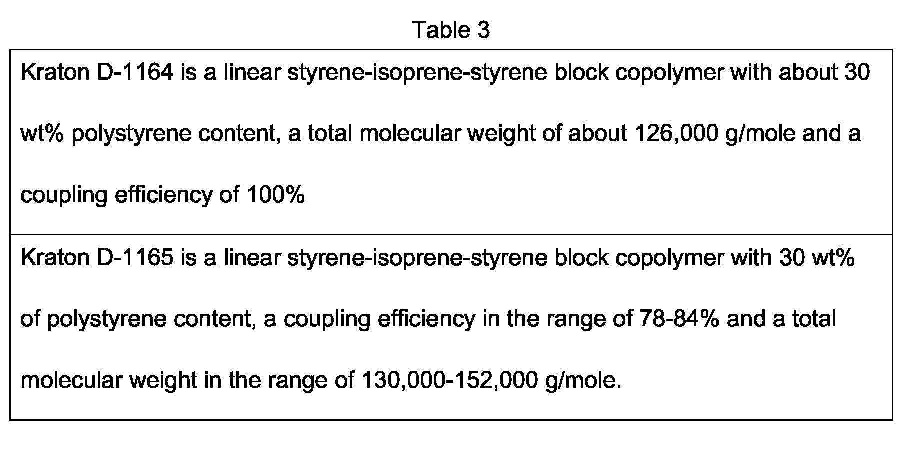

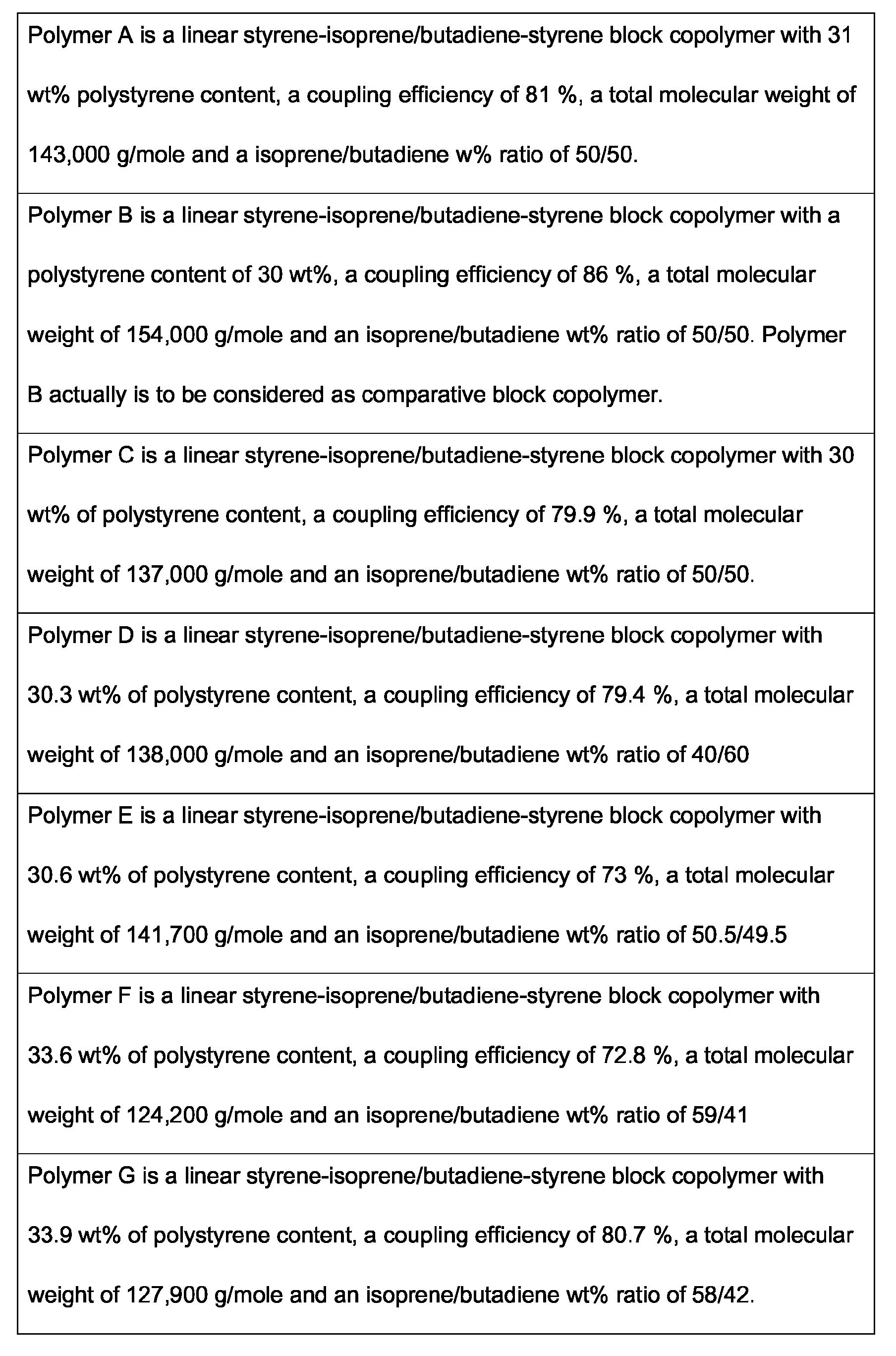

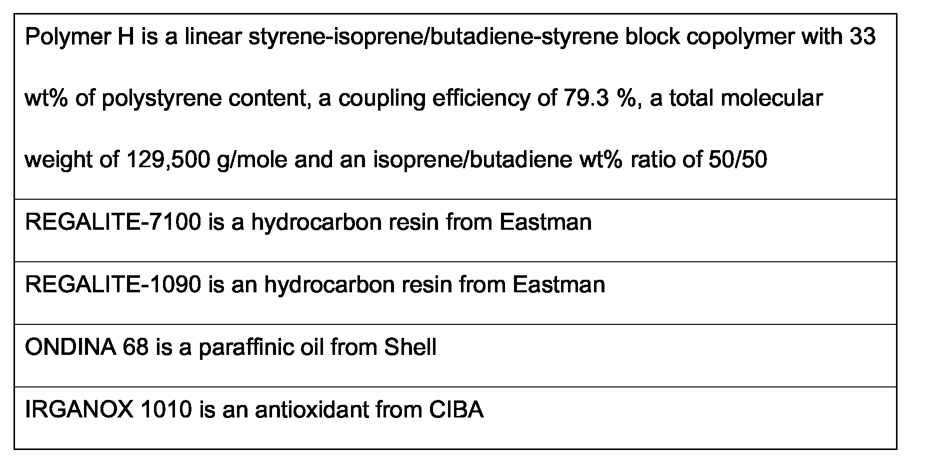

### Example 1

The viscosity of hot-melt adhesive compositions comprising the ingredients as specified hereafter was measured at different temperatures.

Each composition comprised:
100 parts by weight of block copolymer,
250 parts by weight of REGALITE-1090 hydrocarbon resin,
50 parts by weight of ONDINA 68 plasticizing oil,
3 parts by weight of antioxidant (IRGANOX 1010).

**Table 4**

| (Viscosities in Pa.s) | | | | | | | | | |
|---|---|---|---|---|---|---|---|---|---|
| Temp. | D-1165 | A | B | C | D | E | F | G | H |
| 130°C | 79.4 | 25.7 | 110 | 25 | 33.4 | 31 | 16.3 | 29.4 | 23.4 |
| 140°C | 20.7 | 10.2 | 26.6 | 11.1 | 14.7 | 12.8 | 6.9 | 11.4 | 10.7 |
| 150°C | 7.6 | 5.5 | 12 | 6.8 | 8.3 | 7.2 | 3.8 | 6 | 6.1 |
| 160°C | 3.6 | 3.6 | 8.2 | 4.4 | 5.3 | 4.6 | 2.4 | 3.6 | 4 |

### Example 2

The viscosity of hot-melt adhesive compositions comprising the ingredients as specified hereafter was measured at different temperatures.

Each composition comprised:
100 parts by weight of block copolymer,
272 parts by weight of hydrocarbon resin REGALITE-7100,
125 parts by weight of ONDINA 68 plasticizing oil,
3 parts by weight of antioxidant IRGANOX 1010

**Table 5**

| (Viscosities in Pa.s) | | | |
|---|---|---|---|
| Temperature | D-1164 | D-1165 | A |
| 110°C | 26.6 | 42.3 | 20.4 |
| 120°C | 11.32 | 13.7 | 9.45 |
| 130°C | 5.51 | 6.27 | 5.0 |
| 140°C | 3.22 | 3.38 | 3 |
| 150°C | 2.02 | 2.07 | 2 |
| 160°C | 1.33 | 1.38 | 1.38 |

### Technical field

The present invention relates to a low hot-melt viscosity adhesive composition for non-wovens.

More in particular the present invention relates to a low hot-melt viscosity adhesive composition for the manufacture of sanitary articles such as infant and adult diapers, sanitary napkins, incontinent pads, bed pads, feminine pads, panty shields, and the like, comprising at least one element of non-woven material.

## Claims

1. Low hot-melt adhesive composition used in non-woven assemblies, comprising
a) 100 parts by weight of a block copolymer of the formula S-(I/B)-S, wherein S represents a predominantly poly(styrene) block and (I/B) represents a polymer block obtained by at random copolymerization of a mixture of predominantly isoprene and butadiene in a weight ratio in the range of from 70:30 to 30:70, wherein the total block copolymer has an apparent molecular weight in the range of from 120.000 to 150.000 and has a poly(styrene) content of from 25 to 40 wt% and a coupling efficiency of from 60 to 100 %,
b) from 250 to 300 parts by weight of a tackifying resin,
c) from 5 to 150 parts by weight of a plasticizer , and
d) from 1 to 3 parts by weight of auxiliaries, such as stabilizers and/or antioxidants.

2. Low hot-melt viscosity adhesive composition according to claim 1, wherein the block (I/B) has been obtained by at random polymerization of a mixture of butadiene and isoprene in a weight ratio of from 60:40 to 40:60.

3. Low hot-melt viscosity adhesive composition according to claim 1, wherein the (I/B) block has a vinyl content in the polymerized butadiene in the range of from 7 to 9 wt% and a vinyl content in the polymerized isoprene in the range of from 4 to 6 wt%.

4. Low hot-melt viscosity adhesive composition according to claim 1, wherein the block copolymer S-(I/B)-S has a polystyrene content of from 30 to 34 wt%.

5. Low hot-melt viscosity adhesive composition according to claim 1, wherein from 250 to 280 parts by weight of hydrocarbon resin per 100 parts by weight of block copolymer have been included.

6. Disposable articles such as infant and adult diapers or sanitary napkins, incontinent pads, bed pads, feminine pads, panty shields, comprising at least one non-woven element and assembled by the use of the low hot-melt viscosity adhesive composition according to claims 1-6.

7. Block copolymers of the formula S-(I/B)-S, wherein S represents a predominantly poly(styrene) block and (I/B) represents a polymer block obtained by at random copolymerization of a mixture of predominantly isoprene and butadiene in a weight ratio in the range of from 60:40 to 40:60, wherein the total block copolymer has an apparent molecular weight in the range of from 124.000 to 145.000 and has a poly(styrene) content of from 25 to 40 wt% and a coupling efficiency of from 70 to 100 %.

8. Block copolymers according to claim 7, wherein the S blocks have been derived from pure styrene.

9. Block copolymers according to claim 7, wherein the (I/B) block has a vinyl content in the polymerized butadiene in the range of from 7 to 9 wt% and a vinyl content in the polymerized isoprene in the range of from 4 to 6 wt%.

10. Block copolymers according to claim 7, wherein the block copolymer S-(I/B)-S has a polystyrene content of from 30 to 34 wt%.
